# EUROPEAN PATENT APPLICATION

(11) **EP 4 635 623 A1**
(43) Date of publication of application: **22.10.2025**
(21) Application number: 23903802.9
(22) Date of filing: 21.11.2023
(51) Int. Cl.: B01J 23/63, B01J 37/16, B01J 37/08, B01J 37/02, C01B 3/04

(54) **AMMONIA DECOMPOSITION CATALYST AND METHOD FOR PRODUCING SAME**

(30) Priority: 16.12.2022 KR 20220177513
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: RHEE, Chang-Houn, Pohang-si, Gyeongsangbuk-do 37673 (KR); SOHN, Hyun-Tae, Seoul 02792 (KR); CHA, Jun-Young, Seoul 02792 (KR); KIM, Yong-Min, Seoul 02792 (KR); KIM, Jin-Su, Seoul 02792 (KR); PARK, Hai-Woong, Ulsan 44658 (KR); KIM, Beom-Sik, Pohang-si, Gyeongsangbuk-do 37673 (KR); KWON, Gi-Hun, Pohang-si, Gyeongsangbuk-do 37685 (KR); JOO, Sang-Wook, Pohang-si, Gyeongsangbuk-do 37680 (KR); YOON, Chang-Won, Seoul 01791 (KR); LEE, Yu-Jin, Seoul 02792 (KR)
(74) Representative: Pfenning, Meinig & Partner mbB
(86) International application number: PCT/KR2023/018797
(87) International publication number: WO 2024/128599

(57) **Abstract**

The present invention relates to an ammonia decomposition catalyst and a method for producing same and, more specifically, to an ammonia decomposition catalyst containing alumina (Al₂O₃), cerium (Ce), lanthanum (La), ruthenium (Ru), and potassium (K), and a method for producing the ammonia decomposition catalyst.

## Description

### Technical Field

The present disclosure relates to an ammonia decomposition catalyst and a method for producing the same.

### Background Art

In order to overcome climate change and various environmental pollution problems, efforts are being made worldwide to reconstruct carbon-based energy societies into renewable energy-based energy societies. However, renewable energy is distributed unevenly by region and time, so in order to use renewable energy universally, it is necessary to establish a trade system between countries or continents using energy storage devices that may store large amounts of renewable energy.

Hydrogen is a substance that may store large amounts of energy stably and for a long period of time, and various countries such as Europe, Japan, Saudi Arabia, and Australia are trying to establish a global renewable energy trade system using hydrogen as a renewable energy storage. Meanwhile, according to the Korean government's hydrogen economy activation roadmap, the government has set a goal of increasing domestic hydrogen supply. However, since hydrogen has a very low energy density relative to its volume, research on chemical and physical hydrogen storage methods is essential to economically import large amounts of hydrogen from overseas.

To this end, various hydrogen storage materials such as ammonia (NH₃), liquid organic hydrogen compounds (LOHCs), and liquefied hydrogen (LH₂) are being actively studied. In particular, ammonia is receiving attention as a hydrogen (renewable energy) storage medium with high commercial feasibility due to its high hydrogen storage capacity (17.6 wt%, 108 g/L), ease of storage (8.74 Kpa, 20°C), and the ability to utilize existing ammonia storage and transportation infrastructure.

One ammonia molecule consists of three hydrogen atoms and one nitrogen atom, and when this ammonia molecule is decomposed at high temperatures, only hydrogen, and nitrogen gas, which accounts for 78% of air, are produced. Ammonia has the advantage of being able to use existing infrastructure for large-scale storage and long-distance transportation as is, and in addition, since only hydrogen and nitrogen are produced, carbon dioxide emissions may be minimized.

However, the biggest problem is that the ammonia decomposition reaction itself is carried out at high temperature and pressure, and thus a considerable amount of heat should be supplied to heat the reactor. The ammonia decomposition reaction is a reaction in which two ammonia molecules are decomposed into one nitrogen molecule and three hydrogen molecules, as illustrated in the following reaction equation, and is an endothermic reaction that requires approximately 46 kJ/mol of heat.

2NH₃(g) -> N₂(g) + 3H₂(g)

The thermodynamic ammonia conversion rate reaches 99.1% at 400°C and 1 atm conditions, but in reality, it is operated at a reaction temperature higher than or equal to 550°C due to the reaction kinetic energy barrier. For this reason, if a solid powder-type catalyst is used together during the reaction, the reaction temperature may be significantly lowered.

Ruthenium increases the electron density of the catalyst, facilitating nitrogen desorption. The size of the ruthenium metal also affects the degree of reaction activity, and the size of ruthenium, which exhibits the best activity in the ammonia dehydrogenation reaction, is known to be approximately 3-5 nm. Such a size of ruthenium metal is known to provide optimal ruthenium-nitrogen binding energy, forming a large number of active sites that exhibit high activity in ammonia dehydrogenation.

The interaction between ruthenium and alumina support limits the ruthenium agglomeration effect, preventing active site loss and reducing active site loss due to bulking, which occurs when metal particles penetrate into the support.

On the other hand, the commonly used ruthenium noble metal-based catalyst has high ammonia decomposition activity, but is very expensive, which is not desirable in terms of process economy. Therefore, the development of an economical ruthenium catalyst that has a low ruthenium content and exhibits high activity and high durability at a temperature lower than the existing reaction temperature is required.

To date, many ruthenium-based catalysts have been developed domestically and internationally, but there has been no case of developing a ruthenium-based catalyst in powder and bead form by finely controlling the physicochemical composition and properties and experimentally proving the same in order to optimize the ruthenium-nitrogen binding energy and ruthenium-support interaction.

In particular, in order to efficiently proceed with the ammonia dehydrogenation reaction, nitrogen recombination, which is the reaction rate-determining operation, should be promoted. To this end, an appropriate metal-nitrogen binding energy is required. The size of ruthenium metal also affects the degree of reaction activity, so it is also necessary to develop technology to obtain the size of ruthenium that exhibits the highest activity in the ammonia dehydrogenation reaction.

### Summary of Invention

### Technical Problem

An aspect of the present disclosure is to provide an ammonia decomposition catalyst capable of producing high-purity hydrogen at a temperature of 500°C or less.

Another aspect of the present disclosure is to provide an ammonia decomposition catalyst having excellent ammonia decomposition and hydrogen production ability and high activity and durability.

Another aspect of the present disclosure is to provide a method for producing a catalyst having the above characteristics.

Another aspect of the present disclosure is to provide a method for decomposing ammonia using the catalyst of the present disclosure.

### Solution to Problem

According to an aspect of the present disclosure, an ammonia decomposition catalyst includes alumina (Al₂O₃), cerium (Ce), lanthanum (La), ruthenium (Ru), and potassium (K) .

According to another aspect of the present disclosure, a method for producing an ammonia decomposition catalyst includes an operation of synthesizing an alumina support by calcining alumina (Al₂O₃); an operation of supporting cerium (Ce) on the alumina support and producing Ce-Al₂O₃; an operation of supporting lanthanum (La) on the Ce-Al₂O₃ and producing La-Ce-Al₂O₃; an operation of supporting ruthenium (Ru) on the La-Ce-Al₂O₃ and producing Ru/La-Ce-Al₂O₃; and an operation of mixing and supporting potassium (K) on the Ru/La-Ce-Al₂O₃ and producing K-Ru/La-Ce-Al₂O₃.

### Advantageous Effects of Invention

An ammonia decomposition catalyst according to the present disclosure has excellent hydrogen production capacity at a temperature of 550°C or less, and high catalytic activity and durability. The ammonia decomposition catalyst according to an embodiment of the present disclosure may maximize ammonia decomposition efficiency by optimizing the interaction between the metal and the support, and may exhibit higher stability and activity with a lower ruthenium content at the same reaction temperature and gas space velocity compared to ammonia decomposition catalysts of the related art.

### Brief Description of Drawings

FIG. 1 is an image of a powder in which alumina is extracted from an ammonia decomposition catalyst according to an embodiment of the present disclosure.
FIG. 2 is an XPS elemental analysis result of alumina extracted from an ammonia decomposition catalyst according to an embodiment of the present disclosure.
FIG. 3 is a STEM image according to whether or not hydrogen reduction treatment is performed on an ammonia decomposition catalyst according to an embodiment of the present disclosure.
FIG. 4 is a graph illustrating the results of an XRD evaluation according to changes in the cerium content of an ammonia decomposition catalyst according to an embodiment of the present disclosure.
FIG. 5 is a graph illustrating the results of a TPR evaluation according to changes in the cerium content of an ammonia decomposition catalyst according to an embodiment of the present disclosure.
FIG. 6 is a graph illustrating the results of an XRD evaluation according to changes in the cerium content of an ammonia decomposition catalyst according to an embodiment of the present disclosure.
FIG. 7 is a graph illustrating the results of an ammonia decomposition performance evaluation according to changes in the cerium content of an ammonia decomposition catalyst according to an embodiment of the present disclosure.
FIG. 8 is a graph illustrating the results of evaluating ammonia decomposition performance according to whether a hydrogen reduction treatment is performed on an ammonia decomposition catalyst according to an embodiment of the present disclosure.
FIG. 9 is a graph illustrating the results of evaluating ammonia decomposition performance according to changes in the lanthanum content of an ammonia decomposition catalyst according to an embodiment of the present disclosure.
FIG. 10 is a graph illustrating the results of evaluating ammonia decomposition performance according to changes in the cerium content of an ammonia decomposition catalyst according to an embodiment of the present disclosure.
FIG. 11 is a graph illustrating the results of evaluating ammonia decomposition performance of an ammonia decomposition catalyst according to the type of rare earth metal according to an embodiment of the present disclosure.
FIG. 12 is a graph illustrating the results of evaluating ammonia decomposition performance of an ammonia decomposition catalyst according to the type of alkali metal and rare earth metal according to an embodiment of the present disclosure.
FIG. 13 is a graph illustrating the results of evaluating ammonia decomposition performance of an ammonia decomposition catalyst according to changes in the potassium content according to an embodiment of the present disclosure.
FIG. 14 is a graph illustrating the results of evaluating the ammonia decomposition performance of an ammonia decomposition catalyst according to a change in the calcination temperature according to an embodiment of the present disclosure.
FIG. 15 is a graph illustrating the results of evaluating the ammonia decomposition performance of an ammonia decomposition catalyst according to an embodiment of the present disclosure according to a time.

### Best Mode for Invention

Hereinafter, a preferred embodiment of the present disclosure will be described with reference to the attached drawings. However, the embodiment of the present disclosure may be modified in various other forms, and the scope of the present disclosure is not limited to the embodiment described below.

According to the present disclosure, an ammonia decomposition catalyst capable of producing high-purity hydrogen at a temperature of 550°C or less is provided. The catalyst of the present disclosure is a ruthenium-based ammonia decomposition catalyst having very high catalytic activity and durability.

More specifically, the ammonia decomposition catalyst of the present disclosure may include alumina (Al₂O₃), cerium (Ce), lanthanum (La), ruthenium (Ru), and potassium (K).

Alumina is a support for the catalyst, and by utilizing cerium doping, the concentration of lattice oxygen active sites may be increased, thereby maximizing the interaction between the metal and the support. The alumina may be gamma-alumina (gamma-Al₂O₃). When alumina is used as a support, the stability of cerium ions (Ce³⁺) increases, which may form more surface lattice oxygen deficiency sites. The optimized cerium-alumina support interaction limits the aggregation of ruthenium metal, prevents bulking where ruthenium metal penetrates into the support, and also affects the binding energy between ruthenium and nitrogen, so that a highly active catalyst may be synthesized.

The ammonia decomposition catalyst of the present disclosure may contain 5 to 25 wt% of cerium, for example, 6 wt%. When the content of the catalyst is less than or exceeds the above range, the catalytic activity may be reduced.

The ammonia decomposition catalyst of the present disclosure may contain one of rare earth metals, for example, lanthanum (La), gadolinium (Gd), strontium (Sr), yttrium (Y), samarium (Sm), and magnesium (Mg), and more preferably, lanthanum. Rare earth metals may prevent the loss of active sites by suppressing the bulking phenomenon in which ruthenium penetrates into the support.

The ammonia decomposition catalyst of the present disclosure may contain 2 to 15 wt% of lanthanum, for example, 4 wt%. If the content of the catalyst is less than or exceeds the above range, the catalytic activity may be reduced.

When lanthanum is supported on Ce-Al₂O₃, the thermal stability of alumina (Al₂O₃) increases, and in particular, the bulking of ruthenium may be prevented and the reduction of active sites may be suppressed in a high-temperature reducing atmosphere.

The ammonia decomposition catalyst of the present disclosure may contain 0.1 to 10 wt% of ruthenium, for example, 3 wt%. If the content of the catalyst is less than or exceeds the above range, the catalytic activity may be reduced.

The ammonia decomposition catalyst of the present disclosure may contain an alkali metal, for example, any one of potassium (K) and cesium (Cs). Alkali metals may increase the electron density of ruthenium, weaken the binding energy between ruthenium and nitrogen, and provide a highly active catalyst.

The ammonia decomposition catalyst of the present disclosure may contain 1 to 15 wt% of potassium, for example, 7 wt%. If the content of the catalyst is less than or exceeds the above range, the catalytic activity may be reduced.

When an alkali metal such as potassium, cesium or the like with low electronegativity is included, the electron density of ruthenium may be increased, and by utilizing this, the desorption energy of nitrogen may be reduced, facilitating the desorption of nitrogen. Therefore, when an alkali metal is included, a highly active catalyst may be synthesized.

An ammonia decomposition catalyst of the present disclosure may be produced by an operation of synthesizing an alumina support by calcining alumina (Al₂O₃), an operation of supporting cerium (Ce) on the alumina support and producing Ce-Al₂O₃, an operation of supporting lanthanum (La) on the Ce-Al₂O₃ and producing La-Ce-Al₂O₃, an operation of supporting ruthenium (Ru) on the La-Ce-Al₂O₃ and producing Ru/La-Ce-Al₂O₃, an operation of mixing and supporting potassium (K) on the Ru/La-Ce-Al₂O₃ and producing K-Ru/LaCe-Al₂O₃, and an operation of reducing the K-Ru/La-Ce-Al₂O₃.

The operation of synthesizing an alumina support by calcining alumina may be performed at a temperature of 700°C to 1200°C, for example, 700°C. When the calcination temperature is less than or above the above range, the catalytic activity may be reduced.

The operation of preparing Ce-Al₂O₃ by supporting cerium on the alumina support may include the operation of mixing a cerium precursor with the alumina support, the operation of reducing the mixture of the cerium precursor and the alumina support, and the operation of calcining the mixture of the cerium precursor and the alumina support. The operation of reducing the mixture of the cerium precursor and the alumina support may be performed at a temperature of 500°C to 800°C, for example, 700°C. The operation of calcining the cerium precursor may be performed at a temperature of 300°C to 600°C, for example, 350°C.

The operation of reducing the mixture of the above cerium precursor and the alumina support may be reduction in a hydrogen atmosphere.

The above cerium precursor may be cerium (III) chloride heptahydrate.

When reducing the mixture of the cerium precursor and the alumina support before calcination, aluminum of the alumina support is extracted as AlCl₃ by chlorine contained in the cerium (III) chloride heptahydrate. Ce³⁺ ions fill the empty space where aluminum is extracted, and the concentration of cerium increases. The more Ce³⁺ ions there are, the smoother the interaction with ruthenium becomes, and the electron density may be increased. When the electron density increases, the ruthenium-nitrogen desorption energy may be reduced, facilitating nitrogen desorption.

The operation of preparing La-Ce-Al₂O₃ by supporting lanthanum (La) on the Ce-Al₂O₃ may include an operation of mixing a lanthanum precursor with the Ce-Al₂O₃ and an operation of calcining the mixture of the lanthanum precursor and Ce-Al₂O₃. The operation of calcining the lanthanum precursor may be performed at a temperature of 300°C to 600°C, for example, 350°C.

The lanthanum precursor may be lanthanum (III) nitrate hexahydrate.

The operation of preparing Ru/La-Ce-Al₂O₃ by supporting ruthenium (Ru) on the La-Ce-Al₂O₃ may include an operation of mixing a ruthenium precursor with the La-Ce-Al₂O₃ and an operation of reducing the mixture of the ruthenium precursor and La-Ce-Al₂O₃. The operation of reducing the ruthenium precursor may be performed at a temperature of 400°C to 700°C, for example, 400°C.

The ruthenium precursor that may be used in the present disclosure may be at least one selected from the group consisting of ruthenium chloride (RuC₁₃), ruthenium acetylate (Ru(C₅H₇O₂)₃), ruthenium oxide (RuO₂), and hydrates thereof, and preferably ruthenium (III) chloride hydrate may be used.

The operation of mixing and supporting potassium (K) in the Ru/La-Ce-Al₂O₃ to prepare K-Ru/La-Ce-Al₂O₃ may include an operation of mixing the potassium precursor with the Ru/La-Ce-Al₂O₃ and an operation of reducing the mixture of the potassium precursor and Ru/La-Ce-Al₂O₃. The operation of reducing the potassium precursor may be performed at a temperature of 400°C to 700°C, for example, 400°C. The potassium precursor may be potassium nitrate.

The operation of reducing the ammonia decomposition catalyst may be performed at a temperature of 400°C to 800°C, for example, 800°C.

When using the ammonia decomposition catalyst according to the present disclosure, the metal-support interaction may be optimized to maximize the ammonia decomposition efficiency, and compared to the ammonia decomposition catalyst of the related art, higher stability and activity may be exhibited with a smaller ruthenium content at the same reaction temperature and gas space velocity.

### Mode for Invention

### (Examples)

The present disclosure will be described in more detail through the following examples. The following examples are provided only for understanding the present disclosure and do not limit the present disclosure.

### Inventive Example 1

Gamma-alumina (gamma-Al₂O₃) was calcined at a temperature of 700°C and a heating rate of 5°C/min for 3 hours in an air atmosphere.

Thereafter, the calcined gamma-alumina and cerium (III) chloride heptahydrate as a cerium precursor and ultrapure water (DI water) were added to a rotary evaporation concentrator and mixed, and stirred at a bath temperature of 30°C and a pressure of 0.08 MPa for 2 hours. Then, the mixture was additionally stirred for 1 hour each at temperatures of 40°C, 50°C, 60°C, and 70°C, and then stirred for 2 hours at a final temperature of 80°C to completely evaporate the solution. After that, it was separated from the concentrator and dried in a drying oven for 12 hours or more.

After that, it was reduced for 6 hours under 100% H₂ (hydrogen) atmosphere conditions at a temperature of 700°C, and at this time, the reduction heating rate was 5°C/min. After reduction, it was calcined for 3 hours under air atmosphere conditions at a temperature of 350°C, and at this time, the heating rate was 5°C/min. As a result, a Ce-Al₂O₃ catalyst containing 6 wt% of cerium based on the weight of the total catalyst was prepared.

### Comparative Example 1

A catalyst was prepared in the same manner as Inventive Example 1, except that it was not reduced for 6 hours under 100% H₂ (hydrogen) atmosphere conditions at a temperature of 700°C.

### Inventive Example 2

A Ce-Al₂O₃ catalyst was prepared in the same manner as in Inventive Example 1, except that it contained 3 wt% of cerium based on the weight of the total catalyst.

### Inventive Example 3

A Ce-Al₂O₃ catalyst was prepared in the same manner as in Inventive Example 1, except that it contained 12.5 wt% of cerium based on the weight of the total catalyst.

### Inventive Example 4

A Ce-Al₂O₃ catalyst was prepared in the same manner as in Inventive Example 1, except that it contained 25 wt% of cerium based on the weight of the total catalyst.

### Inventive Example 5

A Ce-Al₂O₃ catalyst was prepared in the same manner as in Inventive Example 1, except that it contained 50 wt% of cerium based on the weight of the total catalyst.

### Comparative Example 2

A Ce-Al₂O₃ catalyst was prepared in the same manner as in Comparative Example 1, except that it contained 3 wt% of cerium based on the weight of the total catalyst.

### Comparative Example 3

A Ce-Al₂O₃ catalyst was prepared in the same manner as Comparative Example 1, except that it contained 12.5 wt% of cerium based on the weight of the total catalyst.

### Comparative Example 4

A Ce-Al₂O₃ catalyst was prepared in the same manner as Comparative Example 1, except that it contained 25 wt% of cerium based on the weight of the total catalyst.

### Comparative Example 5

A Ce-Al₂O₃ catalyst was prepared in the same manner as Comparative Example 1, except that it contained 50 wt% of cerium based on the weight of the total catalyst.

### Comparative Example 6

A Al₂O₃ catalyst was prepared in the same manner as Inventive Example 1, except that the cerium precursor was not added.

### Comparative Example 7

A Al₂O₃ catalyst was prepared in the same manner as Comparative Example 1, except that the cerium precursor was not added.

### Inventive Example 6

Ruthenium (III) chloride hydrate as a ruthenium precursor and ultrapure water were mixed with the catalyst of Inventive Example 1, and stirred for 2 hours at a bath temperature of 30°C and a pressure of 0.08 MPa using a rotary evaporation concentrator. Then, the mixture was stirred for 1 hour each at temperatures of 40°C, 50°C, 60°C, and 70°C, and then stirred for 2 hours at a final temperature of 80°C to completely evaporate the solution. After that, it was separated from the concentrator and dried in a drying oven for 12 hours or more.

After that, it was reduced for 3 hours under conditions of 75% H₂/N₂ (hydrogen/nitrogen) atmosphere at a temperature of 500°C without calcination, and at this time, the reduction heating rate was 5°C/min. As a result, a Ru/Ce-Al₂O₃ catalyst containing 6 wt% of cerium and 2 wt% of ruthenium based on the weight of the entire catalyst was prepared.

### Inventive Example 7

A Ru/Ce-Al₂O₃ catalyst was prepared in the same manner as in Inventive Example 6, except that it contained 12.5 wt% of cerium based on the weight of the entire catalyst.

### Inventive Example 8

A Ru/Ce-Al₂O₃ catalyst was prepared in the same manner as in Inventive Example 6, except that it contained 25 wt% of cerium based on the weight of the entire catalyst.

### Comparative Example 8

Ruthenium (III) chloride hydrate as a ruthenium precursor and ultrapure water were mixed with the catalyst of Comparative Example 6, and stirred for 2 hours at a bath temperature of 30°C and a pressure of 0.08 MPa using a rotary evaporation concentrator. Then, the mixture was additionally stirred for 1 hour each at temperatures of 40°C, 50°C, 60°C, and 70°C, and then stirred for 2 hours at a final temperature of 80°C to completely evaporate the solution. After that, it was separated from the concentrator and dried in a drying oven for 12 hours or more.

After that, it was reduced for 3 hours under conditions of 75% H₂/N₂ (hydrogen/nitrogen) atmosphere at a temperature of 500°C without calcination, and the reduction heating rate was 5°C. As a result, a Ru/Al₂O₃ catalyst containing 2 wt% of ruthenium based on the weight of the total catalyst was prepared.

### Comparative Example 9

A Ru/CeO₂ catalyst was prepared in the same manner as in Comparative Example 8, except that CeO₂ was used instead of alumina, as a support.

### Comparative Example 10

A Ru/CeO₂ catalyst was prepared in the same manner as in Comparative Example 9, except that hydrogen reduction treatment was not performed.

### Comparative Example 11

Lanthanum (III) nitrate hexahydrate as a lanthanum precursor and ultrapure water were mixed with the catalyst of Comparative Example 9, and stirred for 2 hours at a bath temperature of 30°C and a pressure of 0.08 MPa using a rotary evaporation concentrator. Then, the mixture was additionally stirred for 1 hour each at temperatures of 40°C, 50°C, 60°C, and 70°C, and then stirred for 2 hours at a final temperature of 80 °C to completely evaporate the solution. After that, it was separated from the concentrator and dried in a drying oven for 12 hours or more.

After that, it was calcined for 3 hours under air atmosphere conditions at a temperature of 350°C, and at this time, the heating rate was 5°C. As a result, a Ru/La-CeO₂ catalyst containing 6 wt% of cerium, 2 wt% of ruthenium, and 2 wt% of lanthanum, based on the weight of the total catalyst, was prepared.

### Comparative Example 12

A Ru/La-CeO₂ catalyst was prepared in the same manner as Comparative Example 11, except that it contained 4 wt% of lanthanum, based on the weight of the total catalyst.

### Comparative Example 13

A Ru/La-CeO₂ catalyst was prepared in the same manner as Comparative Example 11, except that it contained 12 wt% of lanthanum, based on the weight of the total catalyst.

### Comparative Example 14

A Ru/Al₂O₃ catalyst was prepared in the same manner as Comparative Example 8, except that it contained 3 wt% of ruthenium, based on the weight of the total catalyst.

### Inventive Example 9

A Ru/Ce-Al₂O₃ catalyst was prepared in the same manner as Inventive Example 6, except that it contained 3 wt% of ruthenium, based on the weight of the total catalyst.

### Inventive Example 10

A Ru/Ce-Al₂O₃ catalyst was prepared in the same manner as Inventive Example 7, except that it contained 3 wt% of ruthenium, based on the weight of the total catalyst.

### Inventive Example 11

In the catalyst of Inventive Example 1, lanthanum (III) nitrate hexahydrate as a lanthanum precursor and ultrapure water were mixed, and stirred for 2 hours at a bath temperature of 30°C and a pressure of 0.08 MPa using a rotary evaporation concentrator. Then, the mixture was additionally stirred for 1 hour each at temperatures of 40°C, 50°C, 60°C, and 70°C, and then stirred for 2 hours at a final temperature of 80°C to completely evaporate the solution. After that, it was separated from the concentrator and dried in a drying oven for 12 hours or more.

After that, it was calcined for 3 hours under air atmosphere conditions at a temperature of 350°C, and at this time, the heating rate was set to 5°C. As a result, a La-Ce-Al₂O₃ catalyst containing 6 wt% of cerium and 4 wt% of lanthanum based on the weight of the total catalyst was prepared.

### Comparative Example 15

A catalyst was prepared in the same manner as in Inventive Example 11, except that gadolinium (Gd) was supported instead of lanthanum.

### Comparative Example 16

A catalyst was prepared in the same manner as in Inventive Example 11, except that strontium (Sr) was supported instead of lanthanum.

### Comparative Example 17

A catalyst was prepared in the same manner as in Inventive Example 11, except that yttrium (Y) was supported instead of lanthanum.

### Comparative Example 18

A catalyst was prepared in the same manner as in Inventive Example 11, except that samarium (Sm) was supported instead of lanthanum.

### Comparative Example 19

A catalyst was prepared in the same manner as in Inventive Example 11, except that magnesium (Mg) was supported instead of lanthanum.

### Inventive Example 12

Ruthenium (III) chloride hydrate as a ruthenium precursor and ultrapure water were mixed with the catalyst of Inventive Example 11, and stirred for 2 hours at a bath temperature of 30°C and a pressure of 0.08 MPa using a rotary evaporation concentrator. Then, the mixture was additionally stirred for 1 hour each at temperatures of 40°C, 50°C, 60°C, and 70°C, and then stirred for 2 hours at a final temperature of 80°C to completely evaporate the solution. After that, it was separated from the concentrator and dried in a drying oven for 12 hours or more.

After that, it was reduced for 3 hours under conditions of 75% H₂/N₂ (hydrogen/nitrogen) atmosphere at a temperature of 500°C without calcination, and the reduction heating rate was 5°C/min. As a result, a Ru/La-Ce-Al₂O₃ catalyst containing 6 wt% of cerium, 4 wt% of lanthanum, and 3 wt% of ruthenium based on the weight of the entire catalyst was prepared.

### Inventive Example 13

Potassium nitrate as a potassium precursor and ultrapure water were mixed with the catalyst of Inventive Example 12, and stirred for 2 hours at a bath temperature of 30°C and a pressure of 0.08 MPa using a rotary evaporation concentrator. Then, the mixture was additionally stirred for 1 hour each at temperatures of 40°C, 50°C, 60°C, and 70°C, and then stirred for 2 hours at a final temperature of 80°C to completely evaporate the solution. After that, it was separated from the concentrator and dried in a drying oven for 12 hours or more.

Thereafter, reduction was performed at a temperature of 500°C and under the condition of a 75% H₂/N₂ (hydrogen/nitrogen) atmosphere for 3 hours, and at this time, a reduction heating rate was 5°C/min. As a result, a K-Ru/LaCe-Al₂O₃ catalyst containing 6 wt% of cerium, 4 wt% of lanthanum, 3 wt% of ruthenium, and 7 wt% of potassium based on the total catalyst weight was prepared.

### Comparative Example 20

A Cs-Ru/La-Ce-Al₂O₃ catalyst was prepared in the same manner as in Inventive Example 13, except that cesium was supported instead of potassium.

### Comparative Example 21

A Ru/Gd-Ce-Al₂O₃ catalyst was prepared in the same manner as in Inventive Example 12, except that gadolinium was supported instead of lanthanum.

### Comparative Example 22

A K-Ru/Gd-Ce-Al₂O₃ catalyst was prepared in the same manner as in Inventive Example 13, except that gadolinium was supported instead of lanthanum.

### Comparative Example 23

A Cs-Ru/Gd-Ce-Al₂O₃ catalyst was prepared in the same manner as in Comparative Example 20, except that gadolinium was supported instead of lanthanum.

### Inventive Example 14

A K-Ru/La-Ce-Al₂O₃ catalyst was prepared in the same manner as Inventive Example 13, except that it contained 3.5 wt% of potassium, based on the weight of the total catalyst.

### Inventive Example 15

A K-Ru/La-Ce-Al₂O₃ catalyst was prepared in the same manner as Inventive Example 14, except that the alumina calcination temperature was set to 900°C.

### Inventive Example 16

A K-Ru/La-Ce-Al₂O₃ catalyst was prepared in the same manner as Inventive Example 15, except that it contained 7.0 wt% of potassium, based on the weight of the total catalyst.

### Inventive Example 17

A K-Ru/La-Ce-Al₂O₃ catalyst was prepared in the same manner as Inventive Example 15, except that it contained 10.5 wt% of potassium, based on the weight of the total catalyst.

### Inventive Example 18

A Ru/La-Ce-Al₂O₃ catalyst was prepared in the same manner as Inventive Example 12, except that it contained 2 wt% of ruthenium, based on the total catalyst weight and that the alumina was calcined at 1000°C.

### Inventive Example 19

A Ru/La-Ce-Al₂O₃ catalyst was prepared in the same manner as Inventive Example 18, except that the alumina was calcined at 900°C.

### Inventive Example 20

A Ru/La-Ce-Al₂O₃ catalyst was prepared in the same manner as Inventive Example 18, except that the alumina was calcined at 1100°C.

### Inventive Example 21

A Ru/La-Ce-Al₂O₃ catalyst was prepared in the same manner as Inventive Example 18, except that the alumina was calcined at 1200°C.

### Comparative Example 24

A Ru/La-Ce-Al₂O₃ catalyst was prepared in the same manner as Inventive Example 18, except that the alumina was not calcined.

### (Experimental Example)

### Experimental Example 1: Increase in surface cerium concentration ratio through alumina extraction

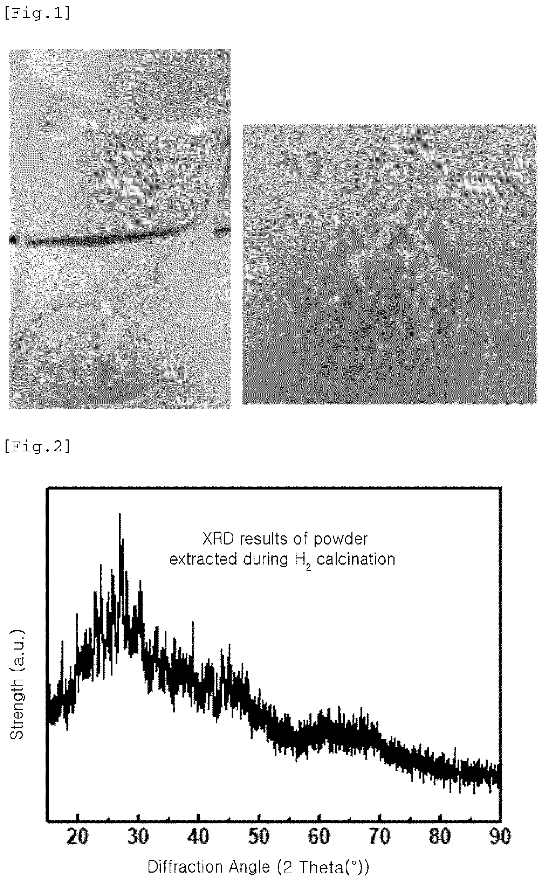

If cerium is supported on an alumina support and then reduced at high temperature before calcination with oxygen, aluminum may be extracted. Chlorine (Cl) contained in cerium (III) chloride heptahydrate extracts powder containing aluminum in the form of AlCl₃·xH₂O. The image of the extracted powder is illustrated in FIG. 1.

It was confirmed through XPS elemental analysis that the extracted powder exists as aluminum, chlorine, and oxygen. The XPS elemental analysis results of the extracted powder are illustrated in Table 1, and the XRD analysis results are illustrated in FIG. 2.

**[Table 1]**

| Element | Oxygen | Aluminum | Carbon | Cerium | Chlorine |
|---|---|---|---|---|---|
| (mol%) | 46 | 23 | 25 | 0 | 6 |

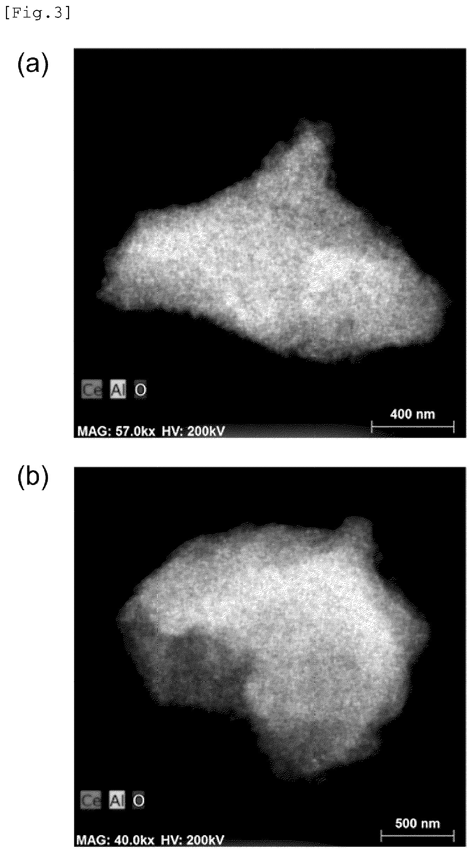

The EDAX elemental analysis results of the catalyst of Inventive Example 1, which was calcined in air after hydrogen reduction treatment, are illustrated in Table 2, and the Scanning Transmission Electron Microscope (STEM) image is illustrated in FIG. 3A. The EDAX elemental analysis results of Comparative Example 1, which was calcined in air directly without hydrogen reduction treatment, are illustrated in Table 3, and the STEM image is illustrated in FIG. 3B.

**[Table 2]**

| Element | Mass Fraction (%) | Mole Fraction (%) | Error (%) |
|---|---|---|---|
| Cerium | 25.08 | 4.57 | 0.71 |
| Aluminum | 37.17 | 35.18 | 0.46 |
| Oxygen | 37.74 | 60.24 | 0.51 |

**[Table 3] [171]**

| Element | Mass Fraction (%) | Mole Fraction (%) | Error (%) |
|---|---|---|---|
| Cerium | 21.28 | 3.76 | 0.40 |
| Aluminum | 40.86 | 37.55 | 0.31 |
| Oxygen | 37.87 | 58.68 | 0.32 |

Comparing the catalyst of Inventive Example 1, which was calcined with oxygen after hydrogen reduction treatment, and the catalyst of Comparative Example 1, which was calcined with air without hydrogen reduction treatment, it can be confirmed that in the case of Inventive Example 1, which was subjected to hydrogen reduction treatment, aluminum concentration decreases as aluminum is extracted, and the cerium concentration increases relatively.

### Experimental Example 2: Increase in cerium ion (Ce³⁺) and increase in lattice oxygen deficiency site according to cerium concentration

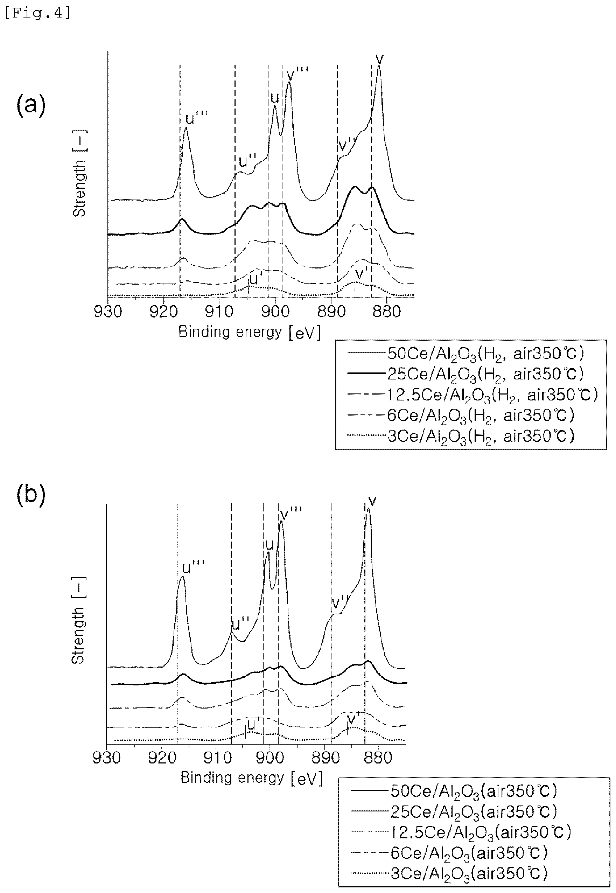

FIG. 4A illustrates the XPS analysis results of the catalysts of Inventive Examples 1 to 5, and FIG. 4B illustrates the XPS analysis results of the catalysts of Comparative Examples 1 to 5.

The catalysts of Inventive Examples 1 to 5 and Comparative Examples 1 to 5 respectively have different cerium concentrations, and it can be confirmed through the XPS analysis result graph of FIG. 4 that the degree of alumina extraction varies depending on the cerium concentration. In the case of the catalysts of Inventive Examples 1 to 5 that underwent hydrogen reduction treatment before calcination, it can be confirmed that there are more cerium ion (Ce³⁺) peaks compared to the catalysts of Comparative Examples 1 to 5 that were calcined in air without hydrogen reduction treatment.

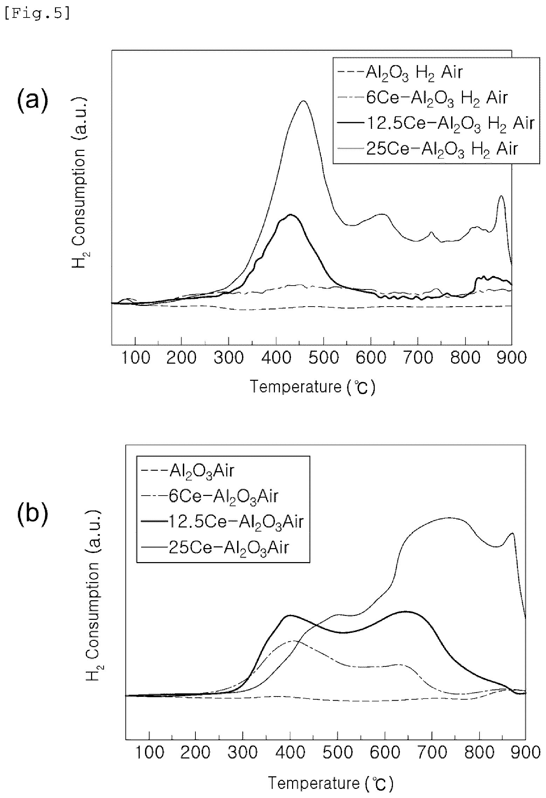

FIG. 5A illustrates the TPR analysis results of the catalysts of Inventive Examples 1, 3 and 4 and Comparative Example 6, and FIG. 5B illustrates the XPS analysis results of the catalysts of Comparative Examples 1, 3, 4 and 7. Through the TPR analysis, it can be confirmed that the concentration of lattice oxygen deficiency sites existing on the surface increases when hydrogen reduction treatment is performed before air calcination during the process of preparing the Ce-Al₂O₃ support. In the case of the catalysts of Inventive Examples 1, 3 and 4 that underwent hydrogen reduction treatment, the reduction peak of cerium was found at a lower temperature compared to the catalysts of Comparative Examples 1, 3 and 4 that were calcined in air without hydrogen reduction treatment. This is determined to be due to the effect of cerium being highly dispersed in nanoparticles.

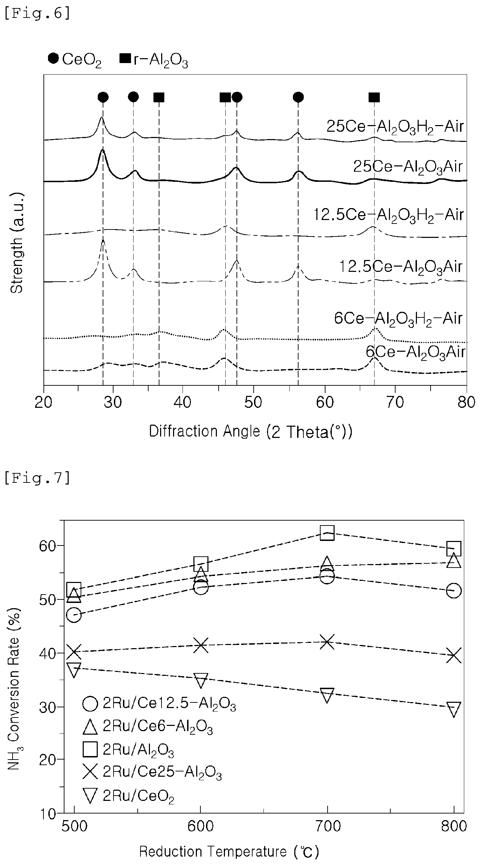

FIG. 6 is a graph illustrating the XRD analysis results of the catalysts of Inventive Examples 1, 3, and 4 and Comparative Examples 1, 3, and 4. Through the XRD analysis results of FIG. 6, it can be confirmed that no CeO₂ peak was found in the low-concentration cerium catalyst of less than 12.5 wt.% that underwent hydrogen reduction treatment. In addition, through the high-concentration cerium catalyst of 25 wt.% or more, it can be confirmed that the catalyst that was directly calcined in air without hydrogen reduction treatment was highly dispersed into nanoparticles despite the higher cerium concentration, so that the CeO₂ peak was not found or was small in size.

### Experimental Example 3: Measurement of ammonia decomposition activity according cerium concentration and reduction temperature

The catalytic activities of Inventive Examples 6 to 8 and Comparative Examples 8 and 9 were evaluated by measuring the ammonia conversion rate, and the ammonia dehydrogenation reaction was performed under the following conditions.
- Space velocity (GHSV): 10,000 mL/g_{cat}·h
- Reaction temperature: 375°C, 400°C, 425°C, 500°C
- Reaction pressure: 1 bar
- Analysis device: Gas chromatography (GC) -TCD: ammonia, nitrogen
- Carrier gas: helium

After performing the ammonia dehydrogenation reaction, unreacted ammonia was analyzed using a gas chromatography device under the conditions below, and the ammonia conversion rate was calculated thereby, and the results are illustrated in FIG. 7.

Unlike the CeO₂ support catalyst, the Ce-Al₂O₃ support catalyst illustrates a tendency for the activity to increase as the reduction temperature increases. The catalyst of Inventive Example 15 of 2wt.% Ru/Cel2.5-Al₂O₃ showed the highest activity under the 700°C reduction condition. This is determined to be due to the effect of dispersing cerium to the atomic level through the alumina extraction calcination method, so that it exists as nano CeO₂ even after calcination, and the content of lattice oxygen deficiency sites increases.

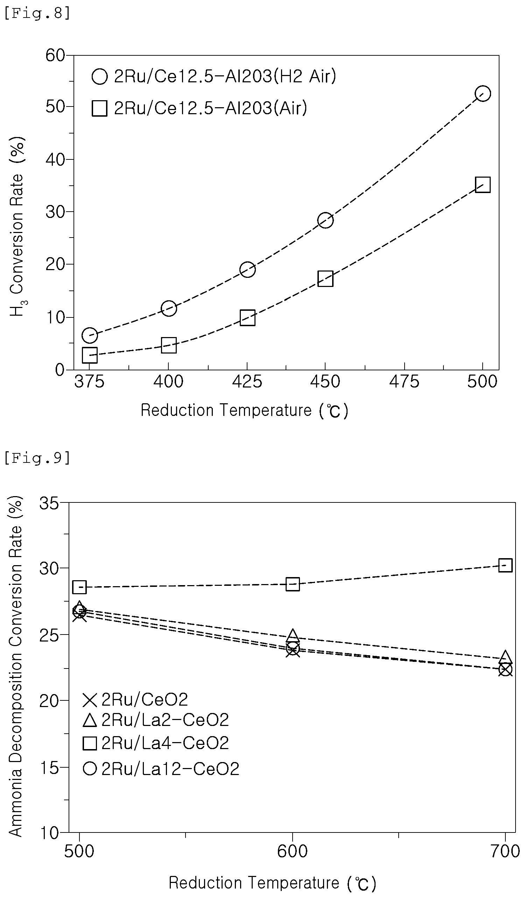

FIG. 8 is a graph comparing the ammonia conversion rate of the catalysts of Inventive Example 7 and Comparative Example 10 of 2 wt.% Ru/Ce-Al₂O₃ according to whether or not hydrogen reduction treatment was performed. It can be seen that the catalyst of Inventive Example 7 of 2 wt.% Ru/Ce-Al₂O₃ that underwent hydrogen reduction treatment has higher activity than the catalyst of Comparative Example 10 of 2 wt.% Ru/Ce-Al₂O₃ that was calcined directly in air without hydrogen reduction treatment. This means that the concentration of Ce³⁺ increases due to the effect of CeO₂ being dispersed into nanoparticles through hydrogen reduction treatment, which ultimately forms more lattice oxygen deficiency sites. The strong metal-support interaction may weaken the ruthenium-nitrogen binding energy and promote the ammonia dehydrogenation reaction.

### Experimental Example 4: Effect of Rare Earth Metal (Lanthanum) Addition on Ammonia Decomposition Activity

In the case of ammonia decomposition reaction in a high-temperature reducing atmosphere, an appropriate strategy to prevent the loss of active sites is required in order to utilize a reducible oxide support (CeO₂, TiO₂, etc.) as a support. When lanthanum is supported on Ce-Al₂O₃, the thermal stability of Al₂O₃ increases, and in particular, it may prevent ruthenium bulking due to excessive interaction of Ru-CeO₂ in a high-temperature reducing atmosphere and suppress the reduction of active sites. For example, it prevents the loss of active sites due to ruthenium bulking by suppressing the penetration of ruthenium metal into the bulk lattice oxygen deficiency site rather than the surface.

FIG. 9 is a graph illustrating the ammonia decomposition conversion rate for each ruthenium reduction temperature according to the lanthanum content of Comparative Examples 9 and 11 to 13. The measurement of the ammonia decomposition conversion rate was performed under the following conditions.
- Space velocity: 10,000 mL/g_{cat}·h
- Ru reduction temperature: 500, 600, 700 °C
- Reaction temperature: 500 °C
- Reaction pressure: 1 bar
- Analysis device: Gas chromatography (GC) -TCD: ammonia, nitrogen
- Carrier gas: helium

As can be seen in FIG. 9, when an appropriate content of lanthanum is supported on CeO₂, it acts as a structural stabilizer to prevent the loss of active sites of ruthenium particles in a high-temperature reduction atmosphere, thereby maintaining or increasing the activity. In particular, when 4 wt.% of lanthanum is supported, it can be confirmed that the activity of the catalyst is maintained even when the reduction temperature increases.

### Experimental Example 5: Optimization of Physicochemical Composition of Spherical Bead Catalyst

The spherical bead catalyst was finally prepared using the information obtained through Experimental Examples 1 to 4.

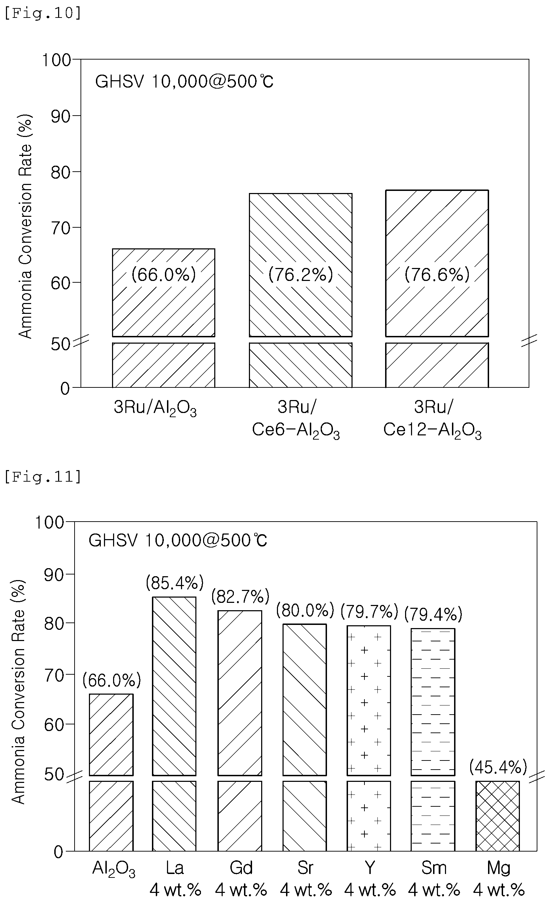

FIG. 10 is a graph illustrating the ammonia conversion rate of the catalysts of Comparative Example 14 and Inventive Examples 9 and 10. The ammonia conversion rate was measured under the following conditions.
- Space velocity: 10,000 mL/g_{cat}·h
- Reaction temperature: 500 °C
- Reaction pressure: 1 bar
- Analysis device: Gas chromatography (GC) -TCD: ammonia, nitrogen
- Carrier gas: helium

It can be confirmed that the ammonia conversion rate of the spherical bead catalyst does not differ significantly in the case of the catalysts loaded with 6 wt.% Ce and 12 wt.% Ce, respectively.

FIG. 11 is a graph illustrating the ammonia conversion rates of the catalysts supporting La, Gd, Sr, Y, Sm, and Mg as rare earth metals in Inventive Example 11 and Comparative Examples 15 to 19 and the catalysts not supporting the rare earth metal in Inventive Example 1. In the same conclusion as the evaluation of the catalytic activity in powder form, it can be confirmed that the catalyst supporting 4 wt.% lanthanum (La) exhibits the highest catalytic activity.

### Experimental Example 6: Effect of Addition of Alkali Metal (Potassium) on Ammonia Decomposition Activity

When an alkali metal with low electronegativity is used as a promoter, the ruthenium electron density may be increased, thereby increasing the ammonia dehydrogenation activity.

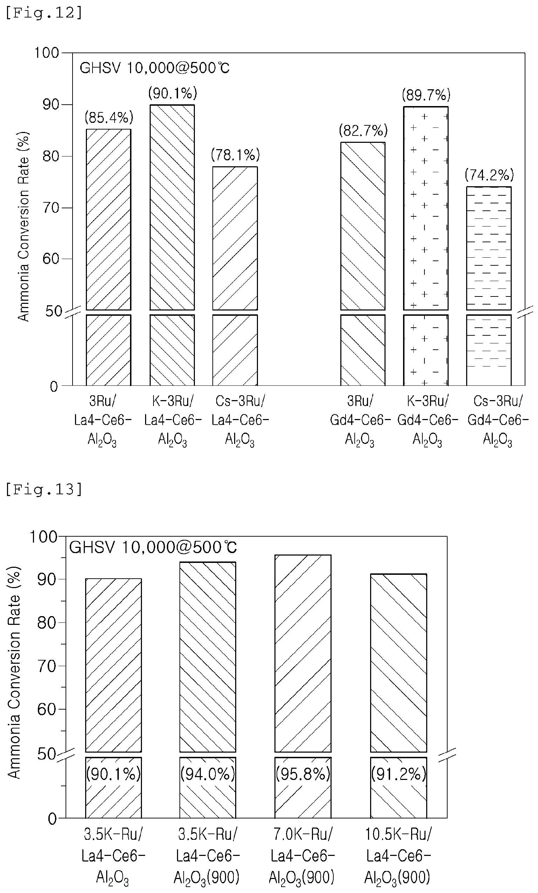

FIG. 12 is a graph comparing and illustrating the ammonia conversion rates by types and contents of the alkali metal and rare earth metal in Inventive Examples 12 and 13 and Comparative Examples 20 to 23. The measurement of the ammonia conversion rate was performed under the following conditions.
- Space velocity: 10,000 mL/g_{cat}·h
- Reaction temperature: 500 °C
- Reaction pressure: 1 bar
- Analysis device: Gas chromatography (GC) -TCD: ammonia, nitrogen
- Carrier gas: helium

It can be confirmed that the activity increased when potassium was added, but the ammonia decomposition ability decreased when cesium was added.

### Experimental Example 7: Effect of alumina calcination temperature and alkali metal content on ammonia decomposition activity

FIG. 13 is a graph comparing the ammonia conversion rates of spherical bead catalysts according to potassium metal content in Inventive Examples 14 to 17. The effect of alkali metal content on ammonia decomposition activity was confirmed under the following conditions while changing the alumina calcination temperature.
- Space velocity: 10,000 mL/g_{cat}·h
- Reaction temperature: 500 °C
- Reaction pressure: 1 bar
- Analysis device: Gas chromatography (GC) -TCD: Ammonia, nitrogen
- Carrier gas: Helium

When the alumina support was heat-treated at a temperature of 900°C for 5 hours in an air atmosphere, the activity increased by a maximum of 10% or more, and the highest activity (95.8%) was shown when the potassium concentration was 7.0 wt.%. When an excessive amount (10.5 wt.%) of potassium was doped, as a result, the activity actually decreased.

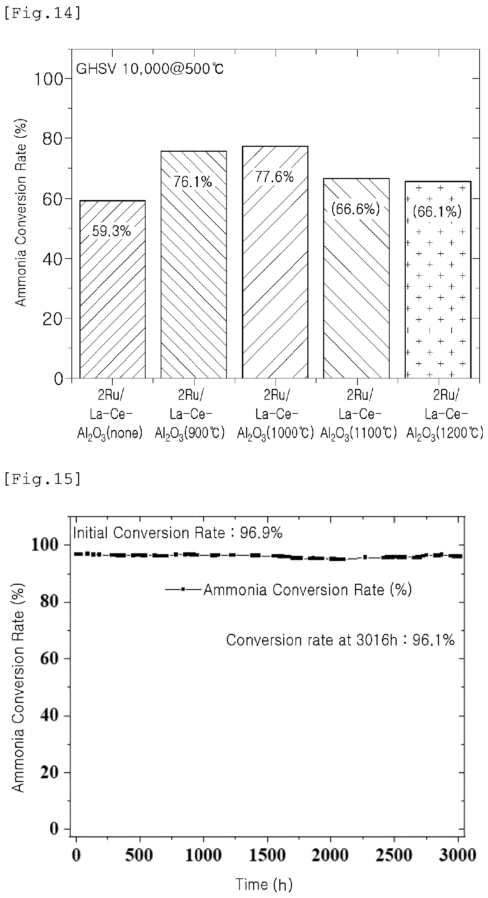

FIG. 14 is a graph comparing the ammonia conversion rates of the spherical bead catalysts of Inventive Examples 19 to 21 and Comparative Example 24 according to the alumina calcination temperature. In the case of a catalyst loaded with 2 wt.% ruthenium, it can be confirmed that the highest activity is shown at a calcination temperature of 1000°C.

### Experimental Example 8: Long-term durability evaluation

The long-term durability of the K-Ru/La-Ce-Al₂O₃ (K: 7 wt.%, Ru: 3 wt.%, La: 4 wt.%, Ce: 6 wt.%) spherical bead catalyst of Inventive Example 13 was evaluated under the following actual plant-level reaction conditions.
- Space velocity: 10,000 mL/g_{cat}·h
- Reaction temperature: 600 °C
- Reaction pressure: 8 bar
- Analysis device: Gas chromatography (GC) -TCD: ammonia, nitrogen
- Carrier gas: helium

FIG. 15 is a graph illustrating the ammonia conversion rate of the catalyst of Inventive Example 13 for 3000 hours. As can be confirmed in FIG. 15, it can be seen that the catalyst is a highly stable catalyst with an activity decrease rate within 1% for a final time of 3,000 hours or more.

Although various embodiments of the present disclosure have been described in detail above, the scope of the present disclosure is not limited thereto, and it will be obvious to those with average knowledge in the relevant technical field that various modifications and variations are possible within a range that does not depart from the technical idea of the present disclosure described in the claims. In addition, some components of the above-described embodiments may be deleted and implemented, and respective embodiments may be implemented in combination with each other.

## Claims

1. An ammonia decomposition catalyst comprising alumina (Al₂O₃), cerium (Ce), lanthanum (La), ruthenium (Ru), and potassium (K).

2. The ammonia decomposition catalyst of claim 1, wherein the ammonia decomposition catalyst produces hydrogen at a temperature of 550°C or less.

3. The ammonia decomposition catalyst of claim 1, wherein the ammonia decomposition catalyst contains 5 to 25 wt% of cerium, 2 to 15 wt% of lanthanum, 0.1 to 10 wt% of ruthenium, and 1 to 15 wt% of potassium based on a total catalyst weight.

4. A method for producing an ammonia decomposition catalyst, comprising:
an operation of synthesizing an alumina support by calcining alumina (Al₂O₃);
an operation of supporting cerium (Ce) on the alumina support and producing Ce-Al₂O₃;
an operation of supporting lanthanum (La) on the Ce-Al₂O₃ and producing La-Ce-Al₂O₃;
an operation of supporting ruthenium (Ru) on the LaCe-Al₂O₃ and producing Ru/La-Ce-Al₂O₃;
an operation of mixing and supporting potassium (K) on the Ru/La-Ce-Al₂O₃ and producing K-Ru/La-Ce-Al₂O₃; and
an operation of reducing the K-Ru/La-Ce-Al₂O₃.

5. The method for producing an ammonia decomposition catalyst of claim 4, wherein the operation of synthesizing the alumina support is performed at a temperature of 700°C to 1200°C.

6. The method for producing an ammonia decomposition catalyst of claim 4, wherein the operation of producing the Ce-Al₂O₃ comprises:
an operation of mixing a cerium precursor with the alumina support to form a mixture;
an operation of reducing the mixture; and
an operation of calcining the reduced mixture.

7. The method for producing an ammonia decomposition catalyst of claim 6, wherein the cerium precursor is cerium (III) chloride heptahydrate.

8. The method for producing an ammonia decomposition catalyst of claim 6, wherein the reducing is performed at a temperature of 500°C to 800°C.

9. The method for producing an ammonia decomposition catalyst of claim 6, wherein the calcining is performed at a temperature of 300°C to 600°C.

10. The method for producing an ammonia decomposition catalyst of claim 4, wherein the operation of producing the La-Ce-Al₂O₃ comprises:
an operation of mixing a lanthanum precursor with the Ce-Al₂O₃ to form a mixture; and
an operation of calcining the mixture.

11. The method for producing an ammonia decomposition catalyst of claim 10, wherein the lanthanum precursor is lanthanum (III) nitrate hexahydrate.

12. The method for producing an ammonia decomposition catalyst of claim 10, wherein the calcining is performed at a temperature of 300°C to 600°C.

13. The method for producing an ammonia decomposition catalyst of claim 6, wherein the operation of producing the Ru/La-Ce-Al₂O₃ comprises:
an operation of mixing a ruthenium precursor with the La-Ce-Al₂O₃ to form a mixture; and
an operation of reducing the mixture.

14. The method for producing an ammonia decomposition catalyst of claim 13, wherein the ruthenium precursor is ruthenium (III) chloride hydrate.

15. The method for producing an ammonia decomposition catalyst of claim 13, wherein the reducing is performed at a temperature of 400°C to 700°C.

16. The method for producing an ammonia decomposition catalyst of claim 4, wherein the operation of producing the K-Ru/La-Ce-Al₂O₃ comprises:
an operation of mixing a potassium precursor with the Ru/La-Ce-Al₂O₃ to form a mixture; and
an operation of reducing the mixture.

17. The method for producing an ammonia decomposition catalyst of claim 16, wherein the potassium precursor is potassium nitrate.

18. The method for producing an ammonia decomposition catalyst of claim 16, wherein the reducing is performed at a temperature of 400°C to 700°C.

19. The method for producing an ammonia decomposition catalyst of claim 4, wherein the reducing is performed at a temperature of 400°C to 800°C.
